(19) **Europäisches Patentamt**
**European Patent Office**
**Office européen des brevets**

(11) **EP 1 582 889 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(51) Int Cl.:
*G01S 7/52* *(2006.01)*   *B60Q 1/48* *(2006.01)*
*B60R 21/0134* *(2006.01)*

(21) Anmeldenummer: **05101313.4**

(22) Anmeldetag: **21.02.2005**

(54) **Verfahren zur temperaturunabhängigen Abstandsmessung**

Method for temperature-independent distance measurement

Méthode pour mesurer une distance, indépendamment de la température

(84) Benannte Vertragsstaaten:
**DE ES FR GB IT SE**

(30) Priorität: **02.04.2004 DE 102004016267**

(43) Veröffentlichungstag der Anmeldung:
**05.10.2005 Patentblatt 2005/40**

(73) Patentinhaber: **ROBERT BOSCH GMBH**
**70442 Stuttgart (DE)**

(72) Erfinder:
• **Kuttenberger, Alfred**
**71696, Moeglingen (DE)**
• **Theisen, Marc**
**74354, Besigheim (DE)**
• **Bunse, Michael**
**71665, Vaihingen/Enz (DE)**

(56) Entgegenhaltungen:
**DE-A1- 3 420 004      DE-A1- 4 120 397**
**US-A- 4 769 793      US-A1- 2002 147 558**

**EP 1 582 889 B1**

**Beschreibung**

Stand der Technik

Die Erfindung geht aus von einem Verfahren zur temperaturunabhängigen Abstandsmessung nach der Gattung des unabhängigen Anspruchs. Es ist schon bekannt, Abstände zwischen Objekten mittels Ultraschallsensoren zu messen. Hierbei wird ein Ultraschallsignal ausgesendet und dieses Signal wird von einem Hindernis zu dem Sender zurückreflektiert. Aus der Laufzeit des Signals kann der Abstand zu dem Hindernis bestimmt werden. Der Abstand bestimmt sich dabei aus dem Produkt von Schallgeschwindigkeit und Laufzeit. Da die Schallgeschwindigkeit jedoch eine temperaturabhängige Größe ist, kann das Messergebnis variieren, wenn man eine konstante Schallgeschwindigkeit annimmt und diese nicht an die bei der Messung herrschende Temperatur anpasst.

Aus der DE 100 20 958 A1 ist hierzu eine Einparkhilfe mit Temperaturkompensation bekannt, bei der die Temperaturkompensation zentral für mehrere im Fahrzeug verwendete Sensoren in einem Steuergerät durchgeführt wird. Anstelle an jedem einzelnen Sensor einen Temperaturfühler vorzusehen, wird hierbei das Steuergerät an einen Datenbus angeschlossen, auf dem die Außentemperatur verfügbar ist. Jedoch muss hierzu die Außentemperatur an anderer Stelle im Fahrzeug gemessen werden.

Aus der DE 41 20 397 A1 ist ferner eine Einrichtung zur Messung mittels Ultraschall bekannt, bei der in einer ersten Ausführungsform in einem defmierten Abstand ein Hindernis aufgestellt wird und mittels einer Laufzeitmessung über den definierten Abstand indirekt die Temperatur und somit eine Messkorrektur für die Abstandsmessung bestimmt wird. Nachteilig ist hierbei jedoch, dass Temperaturschwankungen während einer Fahrt auf diese Weise nicht detektiert werden können. Daher wird in einem anderen Ausführungsbeispiel gelehrt, zwei Sensoren an einem Fahrzeug in einem definierten Abstand vorzusehen und ein Signal direkt über diese Strecke von dem einen Sensor zu dem anderen Sensor zu übertragen, um aus der Laufzeit über die bekannte Strecke die Temperatur bestimmen zu können. Nachteilig ist hierbei jedoch, dass im Allgemeinen durch die Abstrahl- und Empfangscharakteristik von Sensoren sowie durch die Einbaugeometrie ein direkter Übertragungsweg nicht möglich ist. Insbesondere bei einer Auswertung von Kreuzechos, bei denen Signale von einem Sensor zu dem Hindernis abgestrahlt, von diesem reflektiert und von dem anderen Sensor empfangen werden, ist eine unmittelbare Signalausstrahlung von dem einen zu dem anderen Sensor nicht erwünscht, da hierbei das System für Objekte mit einem entsprechenden Abstand teilweise blind werden kann.

Bisher kommen Abstandsmessverfahren im Fahrzeug, insbesondere für Einparkhilfen zum Einsatz, die einen Fahrer durch eine entsprechende Abstandsmessung und entsprechende Warnungen bei einem Einparkvorgang unterstützen. Eine Abstandsmessung mittels Schallwellen kann jedoch auch in Precrash-Systemen in Verbindung mit einer Objektverfolgung verwendet werden, wobei eine Annäherung eines Hindernisses an das Fahrzeug rechnerisch überwacht wird, um Informationen über einen möglichen Aufprallzeitpunkt, einen Aufprallort und/oder eine Aufprallgeschwindigkeit zu ermitteln. Hiermit können insbesondere Rückhaltesysteme im Fahrzeug gesteuert werden. Da die Variation der Temperatur jedoch die Abstandsmessung wesentlich beeinflussen kann, können die ermittelten Abstandsdaten für sicherheitskritische Systeme möglicherweise nicht genau genug sein. Wird eine Temperaturkompensation nach dem Stand der Technik durchgeführt, so muss entweder eine Ungenauigkeit bzw. ein hoher Bauaufwand bei den Sensoren zur Ausbildung einer Messstrecke am Fahrzeug aufgewendet werden, oder die Messung ist einzig von einem Temperatursensor abhängig. Ist jedoch z.B. die Auslösung eines Rückhaltesystems einzig von der Funktion eines Temperatursensors abhängig, so könnte das Risiko bestehen, dass z. B. pyrotechnische Rückhaltemittel aufgrund einer falschen Temperaturbestimmung und somit aufgrund einer falschen Abstandsbestimmung unnötig oder, wenn es erforderlich wäre, nicht ausgelöst werden.

Vorteile der Erfindung

Das erfindungsgemäße Verfahren mit den Merkmalen des Hauptanspruchs hat demgegenüber den Vorteil, dass eine temperaturabhängige Abstandsmessung ermöglicht wird. Indem eine Abstandsmessung mittels wenigstens drei Sensoren durchgeführt wird, kürzt sich bei der Bestimmung des Abstands die Schallgeschwindigkeit und damit die temperaturabhängige Größe heraus. Die Messergebnisse werden dabei derart ausgewertet, dass die Abstandswerte temperaturunabhängig bestimmt werden. Allein aus den von den Sensoren jeweils gemessenen Laufzeiten und den Daten der räumlichen Anordnung der Sensoren zueinander kann der Abstand zu dem Hindernis bestimmt werden.

Weitere Messungen mit anderen Sensoren sind nicht erforderlich. Solche Messungen, auch von Teildaten, wie z.B. der Lufttemperatur, könnten aber selbst plausibilisiert werden. Solche Messungen könnten aber auch der Plausibilisierung des gemessenen Abstands dienen.

Ferner ist es vorteilhaft, nach Berechnung der entsprechenden Abstandsdaten die Temperatur bzw. die Schallgeschwindigkeit zu bestimmen. Diese Daten können einerseits für weitere Messungen zur Verfügung stehen, andererseits kann damit z. B. eine im Fahrzeug vorhandene Temperaturmesseinrichtung kalibriert werden.

Abstandsmessungen im Fahrzeug sind damit unabhängig von einer zusätzlichen Temperaturbestimmung möglich. Da die Temperaturmessung durch die Umgebungsluft hindurch verläuft, werden zusätzlich lokale Temperatureinflüsse vermieden, die z. B. durch Sonneneinstrahlung ein Temperatur-Messergebnis eines Temperatursensors am Fahrzeug selbst verfälschen könnten.

Zeichnung

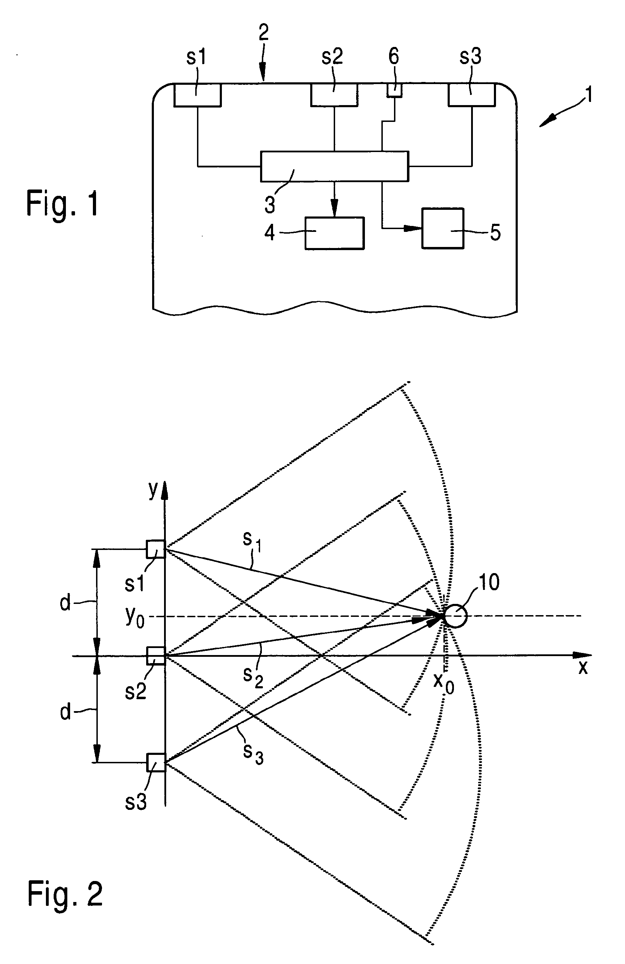

Ausführungsbeispiele der Erfindung sind in der Zeichnung dargestellt und in der nachfolgenden Beschreibung näher erläutert. Es zeigen Figur 1 eine schematische Darstellung einer Sensoranordnung zur Durchführung des erfindungsgemäßen Verfahrens in einem Fahrzeug, Figur 2 ein Diagramm zur Funktionsweise des erfindungsgemäßen Verfahrens.

Beschreibung des Ausführungsbeispiels

Sensoren gemäß dem erfindungsgemäßen Verfahren können sowohl in einer Fahrzeugfrontseite als auch an einer Fahrzeugrückseite angeordnet sein. Eine weitere mögliche Anordnung von Sensoren besteht an der Fahrzeuglängsseite. Prinzipiell ist jedoch die Verwendung für beliebige Abstandsmessungen, auch außerhalb von Fahrzeugen möglich. Da jedoch insbesondere bei Precrash-Systemen in Fahrzeugen einerseits eine hohe Zuverlässigkeit erforderlich ist und andererseits nicht beliebig Zeit für Plausibilitätsmessungen zur Verfügung steht, ist insbesondere eine Verwendung des erfindungsgemäßen Verfahrens für solche Vorrichtungen zur Erfassung eines Zusammenstoßes eines Fahrzeugs mit einem Hindernis oder einem anderen Fahrzeug vorteilhaft.

In der Figur 1 ist als ein Ausführungsbeispiel schematisch ein Ausschnitt aus einem Fahrzeug 1 dargestellt, bei dem an einer Fahrzeugschmalseite 2 drei Abstandssensoren s1, s2 und s3 angeordnet sind. Die Fahrzeugschmalseite 2 kann entweder eine Fahrzeugvorderseite oder auch eine Fahrzeugrückseite sein. Die Abstandssensoren s1, s2, s3 sind als Ultraschallsensoren ausgeführt. Sie senden ein Ultraschallsignal aus, das von einem in der Figur 1 nicht dargestellten Hindernis reflektiert und an die Sensoren zurückreflektiert wird. Die Laufzeitdaten werden an eine Auswerteeinheit 3 weitergeleitet, die die empfangenen Laufzeitdaten verarbeitet. Die Signale der Sensoren s1, s2, s3 werden in einer ersten Ausführungsform geringfügig zeitlich versetzt ausgestrahlt, so dass sich die empfangenen Sensorsignale nicht gegenseitig stören. In einer anderen Ausführungsform strahlen die Sensoren s1, s2, s3 nahezu zeitgleich aus, wobei jedoch durch eine entsprechende Signalcodierung erkannt werden kann, von welchem Sensor das empfangene Signal ausgesendet wurde. Stellt die Auswerteeinheit 3 fest, dass ein vorgegebener Abstand unterschritten wird, so wird über eine Ausgabeeinheit 4, z. B. eine Anzeige oder ein Lautsprechersystem, eine Warnung an einen Fahrer ausgegeben. Ferner kann bei einer Annäherung eines Hindernisses oder bei einem zu erwartenden Zusammenstoß mit einem Hindernis, der ebenfalls von der Auswerteeinheit 3 vorausberechnet werden kann, ein Rückhaltesystem 5, z. B. ein Airbagsystem, angesteuert werden und entsprechend auslösen. Optional ist ferner ein Temperatursensor 6 am Fahrzeug angeordnet, der eine Fahrzeugaußentemperatur misst und an die Auswerteeinheit 3 meldet.

Anhand der Figur 2 ist im Folgenden die Durchführung eines erfindungsgemäßen Abstandsmessverfahrens beschrieben. Die Sensoren s1, s2 und s3 sind in einer bevorzugten Ausführung nebeneinander an einem Stoßfänger des Fahrzeugs angeordnet. Sie können jedoch auch in ein anderes Karosserieteil des Fahrzeugs eingelassen sein. Indem sie nebeneinander angeordnet sind, spannen die Sensoren s1, s2, s3 eine Ebene auf, die in der Figur 2 in einem mit X-Achse und Y-Achse versehenen Koordinatensystem dargestellt sind. Diese Ebene verläuft parallel zur Bodenfläche, auf der das Fahrzeug 1 fährt. Der Abstand des Fahrzeugs, dessen Frontseite dem Wert x=0 in dem Koordinatensystem entspricht, also dem Verlauf der Y-Achse in der Figur 2, kann entsprechend durch einen Abstandswert x in dem Koordinatensystem beschrieben werden.

Die Sensoren s1, s2, s3 senden jeweils einen Signalkegel aus, der in der durch die Sensoren definierten Ebene des Koordinatensystems dreiecksförmig ausgehend von den Sensoren verläuft. Die jeweiligen Signalkegel sind zugeordnet zu den Sensoren gepunktet in der Figur 2 eingezeichnet. Die Signale in den Signalkegeln treffen auf ein Hindernis 10, von dem Signale entsprechend der eingezeichneten, unmittelbaren Signalwege $s_1$, $s_2$, $s_3$ zu den Sensoren zurückreflektiert werden. Die Sensoren messen hierbei die folgenden Signallaufzeiten:

$t_{11}$ für die Signallaufzeit Sensor s1, Hindernis 10, Sensor s1, also für die Strecke $s_1$

$t_{22}$ für die Signallaufzeit Sensor s2, Hindernis 10, Sensor s2, also für die Strecke $s_2$ und

$t_{33}$ für die Strecke Sensor s3, Hindernis 10, Sensor s3, also für die Strecke $s_3$.

Ferner sind die Abstände zwischen den Sensoren s1 und s2 sowie zwischen den Sensoren s2 und s3 bekannt. Im vorliegenden Fall soll der Abstandswert jeweils den gleichen Wert d aufweisen, z.B. d = 60 cm. Jedoch können sich die Abstände zwischen den Sensoren s1 und s2 sowie zwischen den Sensoren s2 und s3 auch unterscheiden.

Der vordere Reflektionspunkt des Hindernisses soll die derzeit noch unbekannten Koordinaten $X_0$ und $Y_0$ in dem Koordinatensystem haben, wobei der Nullpunkt (x=0, y=0) hierbei willkürlich auf die Position der Vorderfront des Sensors s2 gelegt wird. Hierbei ergeben sich die folgenden drei Gleichungen, wobei mit dem Buchstaben c die Schallgeschwindigkeit in Luft bezeichnet wird.

$$s_1 = (t_{11} * c) / 2 = \sqrt{x_{0^2} + (y_0 - d)^2}$$

$$s_2 = (t_{22} * c) / 2 = \sqrt{x_{0^2} + y_{0^2}}$$

$$s_3 = (t_{33} * c) / 2 = \sqrt{x_{0^2} + (y_0 + d)^2}$$

Betrachtet man nun die jeweils beiden rechten Gleichungen, so weisen diese Gleichungen drei Unbekannte auf, nämlich die Schallgeschwindigkeit c und die Koordinaten des Hindernisses 10 ($X_0$, $Y_0$). Denn sowohl die Laufzeiten $t_{11}$, $t_{22}$ und $t_{33}$ sind (durch Messung) ebenso bekannt wie die Abstände der Sensoren d. Da folglich drei Gleichungen mit drei Unbekannten vorliegen, lässt sich nun nach den drei Unbekannten c, $X_0$ und $Y_0$ auflösen. Man erhält somit einerseits den Abstand des Hindernisses (Koordinate $X_0$) und andererseits mit der weiteren Koordinate $Y_0$ auch den Versatz zur Y-Achse und damit die Lage des Hindernisses im Raum. Ferner kann ein Wert für die Schallgeschwindigkeit c bestimmt werden. Die Koordinaten ($X_0$, $Y_0$) des Hindernisses 10 sind dabei unabhängig von der Schallgeschwindigkeit c und damit temperaturunabhängig bestimmt. Der gewonnene Wert der Schallgeschwindigkeit c kann z. B. für eine Korrektur oder eine Plausibilitätsprüfung einer Messung des Temperatursensors 6 verwendet werden. Ferner kann die Schallgeschwindigkeit auch für weitere Temperaturmessungen im Fahrzeug verwendet werden.

Zur Kalibrierung des Temperatursensors 6 kann die entsprechende Messung auch mit einem geeignet ausgebildeten Probehindernis mit definierter Reflektion vorgenommen werden, das jedoch nicht in einem bestimmten Abstand zum Fahrzeug gebracht werden muss, sondern in einem beliebigen Abstand vor einem Fahrzeug positioniert sein kann. Der Benutzer muss nun lediglich eine Messung durchführen. Mit dieser Messung kann er die Schallgeschwindigkeit und aus dieser die Temperatur bestimmen, um den Temperatursensor 6 kalibrieren zu können. Eine Anpassung der Hindernisposition und ein defmierter Abstand zu den Sensoren ist nicht erforderlich.

Damit wenigstens drei Gleichungen vorliegen, sind mindestens drei Sensoren erforderlich. Es können jedoch auch mehr Sensoren angeordnet werden, wobei hierbei die Gleichungen überbestimmt werden und somit zusätzlich eine Plausibilitätskontrolle ermöglicht wird.

**Patentansprüche**

1. Verfahren zur temperaturunabhängigen Abstandsmessung, wobei mindestens drei Sensoren jeweils ein Schallsignal aussenden, wobei die Schallsignale von einem Hindernis zu den Sensoren jeweils zurückreflektiert und von diesen empfangen werden, wobei aus den von den Sensoren jeweils gemessenen Laufzeiten und den Daten der räumlichen Anordnung der Sensoren der Abstand zu dem Hindernis bestimmt wird.

2. Verfahren nach Anspruch 1, **dadurch gekennzeichnet, dass** die räumliche Lage des Hindernisses bestimmt wird.

3. Verfahren nach einem der vorherigen Ansprüche, **dadurch gekennzeichnet, dass** die Temperatur und/oder die Schallgeschwindigkeit aus den gemessenen Laufzeiten und den Daten der räumlichen Anordnung der Sensoren zueinander bestimmt werden.

4. Verwendung eines Verfahrens nach einem der vorherigen Ansprüche zur Kalibrierung eines Temperatursensors für weitere Abstandsmessungen.

5. Verwendung eines Verfahrens nach einem der Ansprüche 1-3 für eine Abstandsmessung in einem Kraftfahrzeug.

**Claims**

1. Method for temperature-independent distance measurement, at least three sensors respectively emitting a sound signal, the sound signals respectively being reflected back from an obstacle to the sensors and being received by the latter, the propagation times respectively measured by the sensors and the data relating to the spatial arrangement of the sensors being used to determine the distance to the obstacle.

2. Method according to Claim 1, **characterized in that** the spatial position of the obstacle is determined.

3. Method according to one of the preceding claims, **characterized in that** the temperature and/or the speed of sound is/are determined from the measured propagation times and the data relating to the spatial arrangement of the sensors with respect to one another.

4. Use of a method according to one of the preceding claims to calibrate a temperature sensor for further distance measurements.

**5.** Use of a method according to one of Claims 1-3 for a distance measurement in a motor vehicle.

**Revendications**

**1.** Procédé de mesure de distance en fonction de la température selon lequel au moins trois capteurs émettent chacun un signal sonore, les signaux sonores étant réfléchis par l'obstacle vers les capteurs respectifs qui les reçoivent et à partir des temps de parcours mesurés par les capteurs respectifs et les données de la disposition spatiale des capteurs, on détermine la distance par rapport à l'obstacle.

**2.** Procédé selon la revendication 1, **caractérisé en ce qu'** on détermine la position spatiale de l'obstacle.

**3.** Procédé selon l'une des revendications précédentes, **caractérisé en ce qu'** on détermine la température et/ou la vitesse du son à partir des temps de parcours mesurés et des données de la disposition spatiale respectives des capteurs.

**4.** Application d'un procédé selon l'une des revendications précédentes pour calibrer un capteur de température pour d'autres mesures de distances.

**5.** Application d'un procédé selon l'une des revendications 1 à 3 pour une mesure de distance dans un véhicule automobile.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10020958 A1

- DE 4120397 A1